# EUROPEAN PATENT SPECIFICATION

(11) **EP 3 362 225 B1**
(45) Date of publication and mention of the grant of the patent: **01.11.2023**
(21) Application number: 16778253.1
(22) Date of filing: 23.09.2016
(51) Int. Cl.: B25B 21/02, B25B 23/147

(54) **PULSE TOOL**
PULSWERKZEUG
OUTIL À IMPULSIONS

(30) Priority: 15.10.2015 SE 1551333
(43) Date of publication of application: 22.08.2018
(73) Proprietor: Atlas Copco Industrial Technique AB, 105 23 Stockholm (SE)
(72) Inventor: ASPLUND, Daniel, Per, Erik, 141 30 Huddinge (SE)
(74) Representative: Hagström, Åsa Charlotta
(86) International application number: PCT/EP2016/072712
(87) International publication number: WO 2017/063851

(56) References cited:
- EP-A1- 1 056 568
- EP-A1- 2 607 020
- WO-A1-98/53960
- WO-A1-2015/139952
- DE-A1- 4 024 577

## Description

The invention relates to an electric hand held pulse tool for performing tightening operations where torque is delivered in pulses to tighten and/or loosen screw joints. Specifically, the invention relates to an electric hand held pulse tool including a sensor for monitoring a parameter reflecting a delivered torque pulse and a control unit for controlling the electric motor during the tightening operation based on said monitored parameter.

### Background

During a tightening operation, in which a pulse tool is used for tightening a joint, torque is applied to the joint in pulses by a motor housed inside the pulse tool. Often it is desired to control the tightening such that a specific torque or clamp force is installed into the joint. The applied torque may be monitored by a torque sensor, but it may also be monitored by an angle meter, an accelerometer or a gyro that monitors the retardation of the output shaft so as to indirectly monitor the applied torque.

In a normal tightening operation only a part of the applied torque contributes to the torque or clamp force that is actually installed into the joint. The major part of the applied torque is lost in friction. The friction depends on temperature, humidity and type and condition of the thread. It is difficult, if not impossible, to foresee the friction with certitude in any given tightening operation. Hence, there is always an uncertainty in how much of the applied torque that is installed into the joint and how much that is lost in friction. Under certain conditions the installed torque may be as low as 10 per cent of the applied torque. The uncertainty with respect to the installed torque may lead to that for a tightening operation where the dynamically measured torque is within a predetermined interval that is considered as valid the clamp force or the statically installed torque may be too low or too high.

In the prior art there exists methods of monitoring the clamp force instead of the dynamical torque. Such methods are however cumbersome and time consuming as they involve the use of ultra sound sensors or the like, which are arranged to monitor the elongation of the screw or bolt in order to evaluate the clamp force.

Other methods exist for deducing the clamp force indirectly from the torque measured in opposite directions. From US 5 105 519 it is known to, during a tightening operation of an otherwise continuous tightening operation, stopping and reversing the rotation of the motor so as to monitor the torque both in tightening and loosening of a joint. By comparing the torque to angle dependency during both tightening and loosening it is possible to determine the friction in the joint and to proceed the tightening towards a target value that corresponds to a torque installed in the joint rather than an applied torque. The method disclosed in US 5 105 519 is however adapted to a fixed tool where there is no limitation in how much reaction torque the structure may withstand and where the time of concluding a specific tightening operation is not of uttermost importance.

Another hand held pulse tool is known from WO9853960A1.

For hand held power tools it is however important both that the reaction force that is subjected to the operator is as low as possible and that the time of concluding a specific tightening operation is as low as possible. An operator may conduct many hundreds of tightening operations during a working cycle and it is therefore important that they are both ergonomic for the well-being of the operator and rapid for the productivity at the work station. An ergonomic tightening operation typically implies that the reaction torque is as low as possible.

Hence, there is a need for a pulse tool that is adapted to deliver a torque in which the installed torque may be controlled and in which a tightening operation may be performed rapidly with a high reliability.

### Summary of the invention

An object of the invention is to provide a torque delivering pulse tool with which the installed torque may be controlled and by means of which a tightening operation may be performed rapidly with a high reliability.

This object is achieved in accordance with a first aspect of the invention by an electric pulse tool according to claim 1.

In accordance with a second aspect the invention relates to a method of tightening a screw joint with an electric hand held pulse tool according to claim 6.

With the invention according to the first and the second aspect an increased reliability may be achieved by an operation step that is easy to implement and that does not slow down the tightening operation. In fact, the tightening operation will be more rapid compared to a common pulse method in which the torque increments are often decreased as the torque approaches the target torque. The torque pulse or pulses that in accordance with the invention is/are provided in the second direction provides information regarding the torque that is actually installed into the joint and thereby the torque increments may be adjusted so as to bring the torque as close as possible to a target torque, without the need of decreasing the torque increment. Also, the clamp force may be estimated such that the torque increments may be adapted to a specific target clamp force, instead of a target torque.

Other features and advantages of the invention will be apparent from the dependent claims, the drawings and from the detailed description of the shown embodiment.

### Short description of the drawings

In the following detailed description reference is made to the accompanying drawings, of which:
- **Fig. 1**: is a schematic representation of a pulse tool according to a specific embodiment of the invention;
- **Fig. 2**: is a schematic representation of the delivered torque as a function of operation time; and
- **Fig. 3**: is a schematic representation of the clamp force installed in a joint as a function of operation time.

### Detailed description of the shown embodiment of the invention

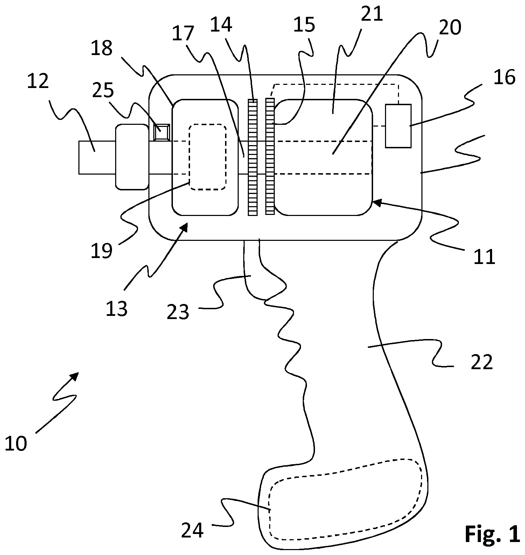

In fig. 1 an electric pulse tool 10 in accordance with a specific embodiment of the invention is schematically shown. The pulse tool 10 is configured to perform tightening operations where torque is delivered in pulses to tighten screw joints. For this purpose the pulse tool comprises a bidirectional electric motor 11 which is arranged to deliver torque in two opposite rotational directions, i.e. clockwise and counter clockwise.

The electric pulse tool 10 further comprises a handle 22, which is of a pistol type in the shown embodiment. The invention is however intended to cover any type of handheld pulse tools. A power supply 24, such as a battery, is arranged in the lower part of the handle and a trigger 23 is arranged for manipulation of the operator so as to power the electric motor 11. The power supply may also be a connection to an electric cable.

Further, the pulse tool comprises an output shaft 12 and a sensor 14,15,25 for monitoring a parameter reflecting a delivered torque pulse. The sensor may be a torque sensor, an angle sensor, an accelerometer, a gyro, or the like. In the shown embodiment there is a first sensor 14,15 that consists of an angle sensor that monitors the rotation of an input shaft 17 by means of a rotational sensor part 14 and a static sensor part 15. A second sensor 25 in the form of a torque sensor is arranged on the output shaft 12. For the invention either an angle sensor or a torque sensor is needed, not both. However, both sensors may be provided to offer increased accuracy or redundancy.

The shown embodiment further comprises a pulse unit 13 comprising an inertia body 18 that houses a piston activated rotator 19. The inertia body 18 is rigidly connected to the input shaft 17 and driven by a rotor 20 of the motor 11. The rotor 20 is in the shown embodiment arranged coaxially inside a stator 21 of the motor 11. A pulse is generated as cam surfaces (not shown) on the inside of the inertia body 18 interacts with the pistons so as to force the rotator 19 to rotate in a conventional manner well known in the art.

The invention is however not limited to pulse tools with a pulse unit. Pulses may also be produced in pulse tools with a direct connection between the motor and the output shaft by pulsing the output of the motor of the pulse tool. The invention also covers such pulse tools and striking pulse tools often known as impact wrenches.

For a pulse tool including a pulse unit the angle sensor 14,15 may be arranged to monitor both the rotation of the inertia body 19 and the retardation of the same. The retardation may be used to calculate the torque that is installed into the joint. The torque sensor 25 is arranged to measure the torque directly. The torque meter is arranged on the output shaft 12 as close as possible to the joint in order to monitor the delivered torque.

A control unit 16 is arranged to control the electric motor 11. The sensor 14,15,25 is arranged to provide information regarding the monitored parameter to the control unit 16. This is conventional in controlled tightening operations where the tightening is governed towards a specific target value, such as target torque, angle or clamp force.

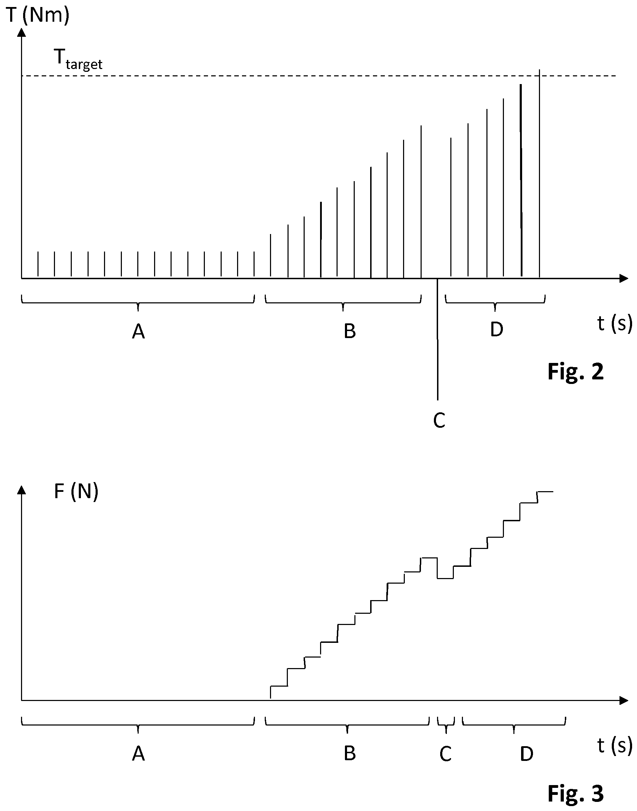

In the inventive pulse tool 10 the control unit 16 is arranged to, during a tightening operation performed by the electric pulse tool 10 in a first direction, control the motor 11 to provide at least one torque pulse in a second direction that is opposite to the first direction. This is illustrated in figures 2 and 3. In figure 2 the delivered torque **T** is illustrated as a function of time **t** during a tightening operation and in figure 3 the installed clamp force **F** is illustrated as a function of time **t** during the same tightening operation.

The tightening operation is illustrated as comprising 4 phases **A-D.** Typically, the illustrated tightening operation is a tightening of a fastener such as a screw into a joint. In the first phase **A** torque pulses of a constant torque are delivered so as to screw the fastener into a thread without imparting any clamp force into the joint. At this point the torque is only needed to overcome the friction in the threads. Torque that is delivered in addition to the torque needed to overcome the friction will accelerate the fastener.

In phase **B** the head of the screw has reached the joint and for every delivered torque pulse additional clamp force is stepwise installed into the joint as the strain in the fastener is increased. During this phase the torque increases substantially linearly with the angle rotation of the fastener and, since the torque is delivered in pulses, in steps with respect to the time **t.** For each pulse during phase **B**, which lasts for a very short period of time, i.e couple of milliseconds, a substantially constant clamp force increase is achieved.

In phase **C** one or more torque pulses are provided in a direction opposite to the rotational direction of the pulses in phase **B.** As is known in the prior art a loosening torque over specific angular interval is utilised to determine the friction in the joint and to deduce the torque that has been installed into the joint. This information is instantly processed by the control unit 16 so as to increase the accuracy of the tightening. As an example it will be possible to deduce the clamp force that has been installed into the joint. As is visible in the respective diagrams of figures 2 and 3, the delivered torque **T** in phase **C** is negative, and hence, the clamp force **F** installed in the joint decreases in phase **C.**

In phase **D** the tightening operation is concluded towards a specific target value, such as a target torque, target angle or target clamp force. A target may be either higher or lower than the torque accomplished during phases A-C, but under most circumstances the target will be higher such that the joint will need to be tightened further. The difference with respect to a normal tightening operation is that the control unit has more information about nature and state of the joint at this point, as a consequence of the pulse in the opposite direction during phase **C.** This additional information may be concluded from one single pulse in the opposite direction.

Preferably, the sensor 14,15 that is arranged to monitor a parameter that reflects a delivered torque pulse in the first direction may also monitor a parameter that reflects a delivered torque pulse in the second direction. This is readily achievable with an angle meter as illustrated in figure 1. Such an angle meter 14,15 may be configured to monitor the rotation in both directions and to deduce the retardation of the pulse unit 13 or of the output shaft 12 in both directions.

Of course, in the embodiment where the sensor is a torque meter, the torque meter may also be configured to monitor the torque in both directions. A torque is typically arranged to monitor the absolute torque, i.e. without information in which direction the torque acts. The control unit 16 will however register the torque as negative or positive as a function of in which direction it has controlled the motor 11 to rotate.

Above, the invention has been described with reference to a specific embodiment. The invention is however not limited to this embodiment. It is obvious to a person skilled in the art that the invention comprises further embodiments within its scope of protection, which is defined by the following claims.

## Claims

1. An electric hand held pulse tool (10) for performing tightening operations where torque is delivered in pulses to tighten screw joints, the pulse tool comprising:
- a bidirectional electric motor (11),
- an output shaft (12),
- a sensor (14,15,25) for monitoring a parameter reflecting a delivered torque pulse, and
- a control unit (16) for controlling the electric motor (11), wherein the sensor (14, 15, 25) is arranged to provide information regarding the monitored parameter to the control unit (16), **characterised in that** the control unit (16) is arranged to, during a tightening operation performed by the electric pulse tool (10) in a first direction, control the motor to provide at least one torque pulse on the output shaft (12) in a second direction that is opposite to the first direction, by using a loosening torque over a specific angular interval to determine the friction in the joint in order to provide information of the torque that is actually installed into the joint and wherein this information is instantly processed by the control unit (16) so as to adjust further torque increments on the output shaft (12) to increase the accuracy and/or speed of the tightening process.

2. The electric pulse tool (10) according to claim 1, wherein the sensor (14,15,25) is arranged to also monitor a parameter reflecting a delivered torque pulse in the second direction.

3. The electric hand held pulse tool (10) according to claim 1 or 2, wherein the sensor (25) is a torque sensor.

4. The electric hand held pulse tool (10) according to claim 1 or 2, wherein the hand held pulse tool (10) includes a pulse unit (13) that intermittently connects the motor (11) to the output shaft (12).

5. The electric hand held pulse tool (10) according to claim 4, wherein the sensor (14, 15) is an angle meter monitoring the rotation and retardation of an inertia body (18) of the pulse unit (13).

6. A method of tightening a screw joint with an electric hand held pulse tool, the method comprising:
- pulsing an output shaft (12) of the electric hand held pulse tool (10) in a first direction so as to tighten a joint,
- monitoring a parameter reflecting a delivered torque pulse in the first direction, **characterised by** pulsing the output shaft (12) in a second direction that is opposite to the first direction, by using a loosening torque over a specific angular interval to determine the friction in the joint in order to provide information of the torque that is actually installed into the joint and wherein this information is instantly processed by the control unit (16) so as to adjust further torque increments on the output shaft (12) to increase the accuracy and/or speed of the tightening process.

## Patentansprüche

1. Elektrischer tragbarer Impulsschrauber (10) zum Durchführen von Anziehvorgängen, wobei ein Drehmoment in Impulsen abgegeben wird, um Schraubverbindungen anzuziehen, der Impulsschrauber umfassend:
- einen bidirektionalen Elektromotor (11),
- eine Ausgangswelle (12),
- einen Sensor (14, 15, 25) zum Überwachen eines Parameters, der einen abgegebenen Drehmomentimpuls reflektiert, und
- eine Steuereinheit (16) zum Steuern des Elektromotors (11), wobei der Sensor (14, 15, 25) angeordnet ist, um Informationen bezüglich des überwachten Parameters an die Steuereinheit (16) bereitzustellen,
**dadurch gekennzeichnet, dass** die Steuereinheit (16) angeordnet ist, um, während eines Anziehvorgangs, der durch den elektrischen Impulsschrauber (10) in einer ersten Richtung durchgeführt wird, den Motor zu steuern, um mindestens einen Drehmomentimpuls an die Ausgangswelle (12) in einer zweiten Richtung, die der ersten Richtung entgegengesetzt ist, durch Verwenden eines Lockerungsdrehmoments über ein spezifisches Winkelintervall, bereitzustellen, um die Reibung in der Verbindung zu bestimmen, um Informationen des Drehmoments bereitzustellen, das tatsächlich in die Verbindung eingebaut ist, und wobei diese Informationen sofort durch die Steuereinheit (16) verarbeitet werden, um weitere Drehmomenterhöhungen auf der Ausgangswelle (12) einzustellen, um die Genauigkeit und/oder die Geschwindigkeit des Anziehprozesses zu steigern.

2. Elektrisches Impulswerkzeug (10) nach Anspruch 1, wobei der Sensor (14, 15, 25) angeordnet ist, um auch einen Parameter zu überwachen, der einen abgegebenen Drehmomentimpuls in der zweiten Richtung widerspiegelt.

3. Elektrischer tragbarer Impulsschrauber (10) nach Anspruch 1 oder 2, wobei der Sensor (25) ein Drehmomentsensor ist.

4. Elektrischer tragbarer Impulsschrauber (10) nach Anspruch 1 oder 2, wobei der tragbare Impulsschrauber (10) eine Impulseinheit (13) einschließt, die den Motor (11) mit der Ausgangswelle (12) unregelmäßig verbindet.

5. Elektrischer tragbarer Impulsschrauber (10) nach Anspruch 4, wobei der Sensor (14,15) ein Winkelmesser ist, der die Drehung und Verzögerung eines Trägheitskörpers (18) der Impulseinheit (13) überwacht.

6. Verfahren zum Anziehen einer Schraubverbindung mit einem elektrischen tragbaren Impulsschrauber, das Verfahren umfassend:
- Pulsieren einer Ausgangswelle (12) des elektrischen tragbaren Impulsschraubers (10) in eine erste Richtung, um eine Verbindung anzuziehen,
- Überwachen eines Parameters, der einen abgegebenen Drehmomentreimpuls in der ersten Richtung widerspiegelt,
**gekennzeichnet durch** Pulsieren der Ausgangswelle (12) in einer zweiten Richtung, die der ersten Richtung entgegengesetzt ist, durch Verwenden eines Lockerungsdrehmoments über ein bestimmtes Winkelintervall, um die Reibung in der Verbindung zu bestimmen, um Informationen des Drehmoments bereitzustellen, das tatsächlich in die Verbindung eingebaut ist, und wobei diese Informationen sofort durch die Steuereinheit (16) verarbeitet werden, um weitere Drehmomenterhöhungen auf der Ausgangswelle (12) einzustellen, um die Genauigkeit und/oder die Geschwindigkeit des Anziehprozesses zu steigern.

## Revendications

1. Outil à impulsions électriques portatif (10) destiné à effectuer des opérations de serrage, où un couple est délivré en impulsions pour serrer des une articulations à vis, l'outil à impulsions (10) comprenant :
- un moteur électrique bidirectionnel (11),
un arbre de sortie (12) ;
- un capteur (14, 15, 25) destiné à surveiller un paramètre reflétant une impulsion de couple délivrée, et
- une unité de commande (16) destinée à commander le moteur électrique (11), dans lequel le capteur (14, 15, 25) est agencé pour fournir des informations concernant le paramètre surveillé à l'unité de commande (16),
**caractérisé en ce que** l'unité de commande (16) est agencée pour, pendant une opération de serrage effectuée par l'outil à impulsions électriques (10) dans une première direction, commander le moteur pour fournir au moins une impulsion de couple sur l'arbre de sortie(12) dans une seconde direction qui est opposée à la première direction, en utilisant un couple de desserrage sur un intervalle angulaire spécifique pour déterminer les frottements dans l'articulation afin de fournir des informations du couple qui est réellement installé dans l'articulation et dans lequel ces informations sont instantanément traitées par l'unité de commande (16) de manière à ajuster d'autres incréments de couple sur l'arbre de sortie (12) pour augmenter la précision et/ou la vitesse du processus de serrage.

2. Outil à impulsions électriques (10) selon la revendication 1, dans lequel le capteur (14, 15, 25) est agencé pour surveiller également un paramètre reflétant une impulsion de couple délivrée dans la seconde direction.

3. Outil à impulsions électriques portatif (10) selon la revendication 1 ou 2, dans lequel le capteur (25) est un capteur de couple.

4. Outil à impulsions électriques portatif (10) selon la revendication 1 ou 2, dans lequel l'outil à impulsions portatif (10) comprend une unité d'impulsion (13) qui relie de manière intermittente le moteur (11) à l'arbre de sortie (12).

5. Outil à impulsions électriques portatif (10) selon la revendication 4, dans lequel le capteur (14, 15) est un compteur d'angle surveillant la rotation et le retard d'un corps d'inertie (18) de l'unité d'impulsion (13).

6. Procédé de serrage d'une articulation à vis avec un outil à impulsions électriques portatif, le procédé comprenant :
- l'impulsion d'un arbre de sortie (12) de l'outil à impulsions électriques portatif (10) dans une première direction de manière à serrer une articulation,
- la surveillance d'un paramètre reflétant une impulsion de couple délivrée dans la première direction, **caractérisé par** l'impulsion de l'arbre de sortie (12) dans une seconde direction qui est opposée à la première direction, en utilisant un couple de desserrage sur un intervalle angulaire spécifique pour déterminer les frottements dans l'articulation afin de fournir des informations du couple qui est réellement installé dans l'articulation et dans lequel ces informations sont traitées instantanément par l'unité de commande (16) de manière à ajuster d'autres incréments de couple sur l'arbre de sortie (12) pour augmenter la précision et/ou la vitesse du processus de serrage.
